(19) Europäisches Patentamt
European Patent Office
Office européen des brevets

(11) **EP 1 884 356 B1**

(12) **EUROPÄISCHE PATENTSCHRIFT**

(45) Veröffentlichungstag und Bekanntmachung des Hinweises auf die Patenterteilung:
**12.04.2017 Patentblatt 2017/15**

(51) Int Cl.:
*B32B 27/34* *(2006.01)*    *C08L 77/00* *(2006.01)*
*C08L 77/12* *(2006.01)*    *F16L 11/04* *(2006.01)*
*C08L 77/02* *(2006.01)*    *C08L 77/06* *(2006.01)*

(21) Anmeldenummer: **07014527.1**

(22) Anmeldetag: **24.07.2007**

(54) **MEHRSCHICHTVERBUND IN FORM EINES EXTRUDIERTEN HOHLPROFILS**

COMPOSITE MATERIAL FOR HOLLOW PROFILE

MATÉRIAU COMPOSITE POUR PROFILE CREUX

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **31.07.2006 EP 06015922**

(43) Veröffentlichungstag der Anmeldung:
**06.02.2008 Patentblatt 2008/06**

(73) Patentinhaber: **EMS-PATENT AG**
**7013 Domat / Ems (CH)**

(72) Erfinder:
• **Schwitter, Paul, Dipl.Chem.**
**8718 Schänis (CH)**
• **Kettl, Ralph, Dipl.-Ing.**
**7417 Paspels (CH)**
• **Übele, Thomas, Dipl.-Ing.**
**7408 Cazis (CH)**
• **Hoffmann, Botho, Dr. rer.nat.**
**7013 Domat/Ems (CH)**
• **Gottschalk, Carsten, Dr. rer.nat.**
**7013 Domat/Ems (CH)**
• **Kägi, Werner, Dipl. Chem.Ing. ETH**
**7013 Domat/Ems (CH)**

(74) Vertreter: **Bremi, Tobias Hans et al**
**Isler & Pedrazzini AG**
**Postfach 1772**
**8027 Zürich (CH)**

(56) Entgegenhaltungen:
**EP-A- 0 922 731    DE-T2- 69 831 239**

**Beschreibung**

Die vorliegende Anmeldung beansprucht die Priorität der europäischen Patentanmeldung EP 06 015 922.5 und betrifft mit Polyamid-Elastomeren (TPE-A) modifizierte Polyamid (PA)-Extrusions-Formmassen zur Verbesserung der Reißdehnung des extrudierten Gegenstandes bei höherer Extrusionsgeschwindigkeit. Die Erfindung betrifft weiterhin Mehrschichtverbunde, insbesondere thermoplastische Mehrschichtverbunde, in Form von Hohlprofilen, bevorzugt für den Kraftfahrzeugbereich, enthaltend wenigstens eine Außenschicht aus diesen Formmassen sowie wenigstens eine weitere Schicht, bevorzugt eine Barriereschicht und optional weitere Schichten sowie ein Verfahren zur Herstellung der Hohlprofile, die insbesondere in Form von Rohren oder Schläuchen, bevorzugt für den Kraftfahrzeugbereich, ganz besonders bevorzugt als Kraftstoffleitung für flüssige Kraftstoffe wie Benzin oder Diesel oder für alternative Kraftstoffe wie z.B. Bioethanol und entsprechende Kraftstoffmischungen oder Rapsmethylester vorliegen können.

Verarbeitungsverfahren und insbesondere Extrusionsverfahren für Kunststoffe sind seit langem Stand der Technik und sind z.B. in W. Michaeli, Einführung in die Kunststoffverarbeitung, 4. Auflage 1999, Carl Hanser Verlag München, Seite 85 ff, beschrieben. In Bild 6.1.1 auf Seite 85 wird das Prinzipschema einer Rohrextrusionsanlage beschrieben. Mit der Extrusionsgeschwindigkeit ist dabei die Geschwindigkeit des Raupenabzugs bzw. des damit transportierten fertigen Hohlprofils gemeint, also die Produktionsgeschwindigkeit der Extrusionsanlage.

Bei der Herstellung von Mehrschichtrohren oder -schläuchen mit einer Polyamid-Außenschicht mittels Extrusion wurde festgestellt, dass sich die mechanischen Eigenschaften, wie Reißdehnung und Kälteschlagzähigkeit, verschlechtern, wenn die Extrusionsanlage mit höherer Geschwindigkeit (ab 20 m/min, ansteigend auf z.B. 60 bis 80 m/min oder höher) gefahren wird. Im vorliegenden Zusammenhang ist mit der Extrusionsgeschwindigkeit die Abzugsgeschwindigkeit des Raupenabzugs nach der Kühlstrecke und der Kalibrierung (die z.B. mittels Wasserkühlung durchgeführt werden kann) gemeint. Dazu ist zu bemerken, dass beim Fahren der Anlage bei einer höheren Extrusionsgeschwindigkeit natürlich gleichzeitig auch der Materialdurchsatz des Extruders proportional höher eingestellt werden muss, weil auch auf dem höheren Geschwindigkeitsniveau immer noch ein bestimmter Artikel mit demselben Querschnitt und derselben Wandstärke bzw. demselben Durchmesser resultieren soll. Bei der Beurteilung der mechanischen Eigenschaften werden also im vorliegenden Fall jeweils extrudierte Gegenstände derselben Geometrie verglichen.

Der zuvor genannte Effekt, dass sich bei höheren Extrusionsgeschwindigkeiten die mechanischen Eigenschaften der hergestellten Gegenstände verschlechtern, ist schon seit Langem der Fachwelt bekannt und stellt einen Nachteil dar, weil dadurch die Extrusionsgeschwindigkeit limitiert ist. Die kritische Stelle des Mehrschichtrohres ist nämlich die Außenhaut, d.h. der Oberflächenbereich des Rohres, der durch Kühlung von außen am Schnellsten abkühlt und sich bei höherer Geschwindigkeit stärker orientiert. In der Folge beginnt wegen der höheren Spannung in der Außenhaut bzw. der geringeren Dehnbarkeit bei mechanischer Beanspruchung diese früher zu reißen. Der zuvor erwähnte Effekt wird z.B. von A. Carin et al. in Intern. Polymer Processing XX (2005), Seiten 305 - 311, beschrieben. Hier findet man auf Seite 310 den bisher bekannten Zusammenhang, dass die Orientierung der Außenhaut mit zunehmender Abzugsgeschwindigkeit zunimmt, d.h. umgekehrt dabei die Reißdehnung abnimmt.

Gemäß EP 0 245 125 B1 wurde nun versucht, die Orientierung in der Außenhaut durch ein kompliziertes und nicht ganz ungefährliches Nachbehandlungsverfahren, nämlich mittels Beflammen von kalibrierten Rohren mit nachfolgendem erneutem Abkühlen zum Verschwinden zu bringen.

EP 1 452 307 A1 beschreibt Mehrschicht-Kraftfahrzeug-Rohrleitungen, die gegen peroxidhaltiges Benzin resistent sind und auch den üblichen Anforderungen in Bezug auf Kälteschlag gerecht werden und einen einfachen und kostengünstigen Aufbau aufweisen. Das Mehrschichtrohr ist dabei mit einer Innenschicht auf Basis einer Mischung von Polyamidhomopolymeren gebildet, und sie weist zusätzlich einen Verträglichkeitsvermittler auf. Charakteristisches Merkmal der EP 1 452 307 A1 ist, dass die Innenschicht nicht auf der Basis eines einzigen Polyamidhomopolymeren oder auf Basis einer Mischung von Polyamid 6 Copolymeren ausgebildet ist, sondern aus einem Blend aus verschiedenen nicht mischbaren Polyamidhomopolymeren, unter Einsatz eines Verträglichkeitsvermittlers. Wird dieser Blend, wie in der EP 1 452 307 A1 vorgesehen, auch für die Außenschicht einer Mehrschichtleitung verwendet, tritt ebenfalls der oben erwähnte Effekt auf, dass sich mit zunehmender Extrusionsgeschwindigkeit die Reißdehnung des Mehrschichtrohres verringert.

GB 2 390 658 B beschreibt Mehrschichtpolymer-Rohr- oder -Schlauchleitungen mit einer Ethylen/Vinylalkohol-Copolymer (EVOH)-Barriereschicht sowie mit einer äußeren Schicht aus Polyamid 612 oder Polyamid 610 und einer Innenschicht aus Polyamid 6, Polyamid 612 oder Polyamid 610. Diese zuvor erwähnten Materialien haben eine sehr gute Wärmeformbeständigkeit und gute Barriereeigenschaften gegenüber Kohlenwasserstoffen und weisen zugleich eine gute Haftung zwischen den Schichten auf, d.h. das Mehrschichtrohr ist delaminationsbeständig. Aber auch bei diesen Mehrschichtrohren tritt der bekannte Effekt auf, dass sich bei zunehmender Extrusionsgeschwindigkeit die Reißdehnung verringert.

DE 698 31 239 T2 beschreibt mehrschichtige Strukturen auf Basis von Polyamiden, insbesondere Rohre mit mehrschichtiger Struktur, wobei mindestens eine Innenschicht und mindestens eine äußere Schicht vorgesehen ist. Die äußere Schicht ist aus einer Mischung von mindestens einem Copolyamid vom Typ 6/6-36 und mindestens einem zweiten thermoplastischen Polymer, d. h. vom Typ Polyamid 6 gebildet. Das zweite Polymer enthält keine Weichsegmente oder Elastomere.

EP-A-1 559 537 beschreibt ein mehrschichtiges Kunststoffrohr mit Barriereeigenschaften für Kraftfahrzeuge. Der Kunststoff der Trägerschicht kann aus einem Blend aus Polyamiden bestehen. Weiterhin wird eine Barriereschicht aus EVOH angegeben. Die Außenschicht des mehrschichtigen Kraftstoffrohres kann zusätzlich von einer äußeren Schutzschicht ummantelt sein, die aus einem thermoplastischen Elastomer (TP) bzw. einem thermoplastischen Polyurethan (TPU) besteht. Diese zusätzliche Schutzschicht kann mit den übrigen Schichten coextrudiert werden und wird damit Bestandteil des Laminatverbundes.

US 2002/0012806 A1 beschreibt thermoplastische Mehrschichtstrukturen, welche innere Schichten aus Polyamiden oder Polyamidmischungen enthalten. In den Polymermischungen sind übliche Polyamidtypen ohne Weichsegmente enthalten.

EP 0 710 537 A2 beschreibt eine mehrschichtige Leitung, deren Innenschicht aus Polyamiden sowie deren Außenschicht aus Polyamiden mit einer dazwischen liegenden Schicht aus EVOH besteht. Die Mischungen der Schichtmaterialien enthalten keine Weichsegmente bzw. Polyamid-Elastomere.

DE 35 10 395 A1 beschreibt Mehrschichtkraftstoffleitungen mit einer Alkoholsperrschicht auf Basis von Polyvinylalkohol. Zum Strömungskanal hin ist eine Polyamidschutzschicht aus Polyamid 11 oder 12 vorgesehen.

US 5,960,977 A1 beschreibt Polymerschlauch- oder Rohrleitungen mit gewellten Segmenten.

Weiterhin sind auf anderen Gebieten des Standes der Technik, wie z. B. in der Medizintechnik oder bei Lichtwellenleitern, Anwendungen von elastomer modifizierten Polymeren bekannt geworden. DE 3 724 997 C2 beschreibt die Verwendung von Polyamid/Polyamid-Elastomer-Mischungen zur Herstellung polymerer Schutzschichten von Lichtwellenleitern. Die Ummantelung von Lichtwellenleitern mit einer Schicht aus Polyamid/Polyamid-Elastomer-Mischungen wird gemäß DE 3 724 997 C2 im Extrusionsverfahren durchgeführt.

EP 0 566 755 B1 beschreibt weiterhin Polyetheramid-Schläuche für medizinische Geräte, welche aus einer Mischung von zwei Polymeren extrudiert sind, von denen das eine Polymer ein Polyetheramid und das andere ein Polyetheresteramid oder ein Polyamid ist.

DE 2 716 004 C3 beschreibt mischbare Polyetheresteramide auf Basis von Laurinlactam mit Polyamid 12 zur Herstellung von flexiblen, kälteschlagzähen Monorohren.

Sowohl bei der DE 3 724 997 C2 und der DE 2 716 004 C3 als auch der EP 0 566 755 B1 werden Polyetheramide mit Laurinlactam als Monomer für den Polyamidblock verwendet. Entsprechende modifizierte Mischungen mit Polyamid 12 werden auch im Polyamid-Kunststoffhandbuch, 3/4, 1998, Carl Hanser Verlag, auf der Seite 872, Absatz 8.3.3 erwähnt. Diese Blends zeigen eine Teilverträglichkeit, welche auf der Cokristallisation der Polyamid 12-Blöcke mit dem Homopolyamid beruht. In den entsprechenden drei Patenten werden weder Mehrschichtleitungen noch die Verträglichkeitsvermittlung erwähnt. Eine solche Mischung würde aber nicht auf Barrierematerialien, insbesondere nicht auf EVOH haften. Polyamide, welche Haftung zu EVOH ergeben, werden zum Beispiel in der EP 1 162 061 B1 beschrieben.

DE 3 916 001 A1 beschreibt ein Vierkomponentengemisch aus amorphen Copolyamiden, Blockpolyetherpolyamiden, Blockpolyetheresterpolyamiden und modifizierten Copolyolefinen. Der Nachteil solcher Mischungen, welche amorphe Copolyamide enthalten, liegt in der tieferen Chemikalienbeständigkeit, insbesondere Zinkchloridbeständigkeit, welche für Kraftstoffleitungen erfüllt werden muss.

Daher ist es Aufgabe der vorliegenden Erfindung, einen in Bezug auf die Schichtenhaftung und auf die Beständigkeit hinsichtlich Chemikalienbeständigkeit, Permeation sowie Auswaschbeständigkeit, verbesserten thermoplastischen Mehrschichtverbund zur Verfügung zu stellen, bei dem auch bei größeren Extrusionsgeschwindigkeiten nur geringe Spannungen in der Aussenhaut zu finden sind, d.h. die mechanischen Eigenschaften nicht beeinträchtigt werden, und die Wirtschaftlichkeit der Rohrherstellung wesentlich erhöht werden kann.

Die Erfinder haben nun überraschenderweise bei Extrusionsversuchen von Mehrschichtrohren, insbesondere mit Barriereschichten, wie z.B. aus EVOH (Ethylen/Vinylalkohol-Copolymeren), festgestellt, dass sich der Effekt der Verschlechterung der mechanischen Eigenschaften in der Aussenhaut in völlig unerwarteter Weise umkehren lässt, wenn man der für die Aussenschicht bestimmten Polyamid-Formmasse einen gewissen Anteil an Polyamid-Elastomer zusetzt, insbesondere wenn das Polyamid-Elastomer mit dem Polyamid nicht mischbar ist.

Die Erfindung betrifft daher neuartige Mehrschichtverbunde, insbesondere thermoplastische Mehrschichtverbunde in Form eines extrudierten Hohlprofils, umfassend eine thermoplastische Aussenschicht und mindestens eine weitere Schicht, wobei die Aussenschicht aus einer Mischung auf Basis von (A) 80 bis 20 Gewichtsteilen von wenigstens einem Polyamid (PA) und (B) 20 bis 80 Gewichtsteilen von wenigstens einem Polyamid-Elastomeren (TPE-A) gebildet ist, letzteres aus der Gruppe der Polyetheramide, der Polyetheresteramide, der Polyetheresteretheramide und Gemischen daraus, wobei die Summe von (A) und (B) 100 Gewichtsteile ergibt. Die bei höherer Extrusionsgeschwindigkeit (insbesondere über 20 m/min) hergestellten Hohlprofile mit einer derartigen Aussenschicht weisen eine höhere Reissdehnung auf, verglichen mit einem sonst gleichen, aber bei niedrigeren Extrusionsgeschwindigkeiten hergestellten Hohlprofil, sowie insbesondere auch im Vergleich zu einem bei gleicher Extrusionsgeschwindigkeit hergestellten Hohlprofil mit einer Polyamid-Aussenschicht ohne Polyamid-Elastomer-Zusatz, wobei die Reissdehnung am fertigen Hohlprofil gemäss DIN EN ISO 527-2 gemessen wird. Mit anderen Worten bedeutet dies, dass schneller produzierte Mehrschichtrohre mit einer erfindungsgemässen Aussenschicht im Vergleich zu bei niedrigeren Extrusionsgeschwindigkeiten hergestellten Mehrschichtrohren eine höhere Reissdehnung aufweisen.

In den Unteransprüchen sind vorteilhafte Ausführungsformen der Erfindung enthalten.

Setzt man dem Aussenschichtmaterial, d.h. einem Polyamid (PA) einen PA-Elastomeranteil (TPE-A) zu, z.B. 50 Gewichtsteile, bezogen auf 100 Gewichtsteile aus der Summe PA und TPE-A, beginnt schon bei 20 m/min Extrusionsgeschwindigkeit die Reissdehnung $\varepsilon_R$ einen Wert von über 200 % einzunehmen, im Unterschied zu einem Mehrschichtverbund mit Polyamid-Aussenschicht ohne (TPE-A)-Zusatz und nimmt, was besonders erstaunlich ist, mit höherer Geschwindigkeit sogar noch zu (vgl. Versuche von Tabelle 4 mit 40 m/min und 60 m/min). Die Definition der Reissdehnung $\varepsilon_R$ ist dem Fachmann bekannt und ist z.B. zu finden im Kunststoff-Kompendium, 2. Auflage, VOGEL Buchverlag Würzburg, 1988, auf der Seite 239 unter den Kennwerten.

Damit lassen sich erfindungsgemäß sowohl die Qualität als auch die Produktivität bei der Extrusion der Mehrschichtverbunde, insbesondere von Mehrschichtrohren, enorm steigern.

Als Polyamide (PA) für die Komponente (A) werden vorteilhafterweise Polykondensate aus aliphatischen Lactamen oder ω-Aminocarbonsäuren mit 4 bis 44 Kohlenstoffatomen, bevorzugt 4 bis 18 Kohlenstoffatomen, oder solche aus aromatischen Aminocarbonsäuren mit 6 bis 20 Kohlenstoffatomen eingesetzt.

Ebenfalls geeignet sind Polykondensate aus mindestens einem Diamin und mindestens einer Dicarbonsäure mit jeweils 2 bis 44 Kohlenstoffatomen. Beispiele für solche Diamine sind Ethylendiamin, 1,4-Diaminobutan, 1,6-Diaminohexan, 1,10-Diaminodecan, 1,12-Diaminodo-decan, m- und p-Xylylendiamin, Cyclohexyldimethylenamin, Bis-(aminocyclohexyl)methan und seine Alkylderivate.

Beispiele für Dicarbonsäuren sind Bernstein-, Glutar-, Adipin-, Pimelin-, Kork-, Azelain- und Sebacinsäure, Dodecandisäure, Dimerfettsäuren mit 36 oder 44 C-Atomen, 1,6-Cyclohexandicarbonsäure, Terephthalsäure, Isophthalsäure und Naphthalindicarbonsäure.

Besonders geeignete Polyamide (PA) für die Komponente (A) sind dabei Homo- und Copolyamide auf Basis von PA6, PA11, PA46, PA12, PA1212, PA1012, PA610, PA612, PA69, PA6T, PA6I, PA10T, PA12T, PA12I, deren Gemische oder Copolymere auf Basis dieser Polyamide, wobei PA11, PA12, PA1212, PA10T, PA12T bevorzugt sind. Bevorzugt sind auch Copolymere auf Basis von den vorgenannten Polyamiden, wie z.B. 12T/12, 10T/12, 12T/106 und 10T/106. Weiterhin können erfindungsgemäß auch Polyamid 6/66, Polyamid 6/612, Polyamid 6/66/610, Polyamid 6/66/12, Polyamid 6/6T und Polyamid 6/6I eingesetzt werden.

Bevorzugte amorphe oder mikrokristalline Homo- und Copolyamide weisen folgende Zusammensetzungen auf: PA 6I, PA 6I/6T, PA MXDI/6I, PA MXDI/MXDT/6I/6T, PA MXDI/12I, PA MAC-MI/12, PA MACMI/MACMT/12, PA 6I/MACMI/12, PA 6I/6T/MACMI/MACMT/12, PA PACM6/11, PA PACM12, PA PACMI/PACM12, PA MACM6/11, PA MACM12, PA MACMI/MACM12, PA MACM12/PACM12, PA 6I/6T/PACMI/PACMT/PACM12/612.

Besonders bevorzugte Polyamide für die Komponente (A) sind dabei PA6, PA11, PA12, PA610, PA612, PA1010, PA1012 und PA1212 oder Mischungen davon.

Die Polyamid-Elastomere (TPE-A) für die Komponente (B) können durch Einbau von flexiblen Polyether- oder Polyolefin-Segmenten in Polyamid-Blockpolymeren hergestellt werden. Die generelle Struktur ist im Polyamid-Kunststoffhandbuch 3/4, Carl Hanser Verlag, München 1998, auf den Seiten 854 und 855 beschrieben.

Die Herstellung von Polyetheramiden wird zum Beispiel in der EP 0 459 862 B1 und der CH 642 982 beschrieben. Dabei werden die Polyetheramide ausgehend von Polyamidsequenzen, die Carboxylgruppen an beiden Kettenenden aufweisen, mit Polyoxyalkylensequenzen, die Aminogruppen an beiden Kettenenden aufweisen, hergestellt.

JP 592 079 30 A beschreibt die Herstellung von Polyesteretheramiden, die Synthese erfolgt dabei durch Co-Kondensation von Polyamidblöcken (z.B. PA 610 oder PA 612), welche Carboxylgruppen an beiden Kettenenden aufweisen, mit Polyetherblöcken, die auf Polyalkylenoxid-Polyolen basieren.

Weitere Beispiele für erfindungsgemäss verwendbare TPE-A finden sich im Polyamid-Kunststoffhandbuch, 3/4, 1998, Carl Hanser Verlag, auf den Seiten 854-871 .

Blockcopolyetheresteretheramide, wie sie in der EP 0 399 415 B1 bzw. der US 5,574,128 erwähnt werden, sind Kombinationen von Polyetheramiden und Polyetheresteramiden. Die Synthese erfolgt dabei durch Co-Kondensation von Polyamidblöcken, welche Carboxylgruppen an beiden Kettenenden aufweisen, mit sowohl Polyetherdiolen als auch Polyetherdiaminen.

Bevorzugt für die Komponente (B) sind Polyamid-Elastomere (TPE-A) aus den Untergruppen der Polyetheramide, der Polyetheresteramide und der Blockcopolyetheresteretheramide. Diese TPE-A werden aus Polyetherblöcken mit reaktiven Endgruppen, welche für die Bildung von Ester- und/oder Amid-Bindungen geeignet sind (bevorzugt werden Hydroxy- und/oder AminoEndgruppen) hergestellt. Das Polyetherrückgrat kann aus Polypropylenglykol (PPG), Polytetramethylglykol (PTMEG), Polybutylenglykol (PBG), Polyethylenglykol (PEG), Polyneopentylglykol (PNPG) und/oder deren Mischungen und/oder deren Copolymeren und/oder deren Blockpolymeren bestehen.

Handelsprodukte typischer Polyetheramide oder von Polyetheresteramiden finden sich im Polyamid-Kunststoffhandbuch, 3/4, 1998, Carl Hanser Verlag, auf der Seite 875. Beispielhafte Materialien sind die von der EMS-Chemie AG, Domat/Ems, Schweiz erhältlichen Produkte Grilon® ELX oder Grilamid® ELY. Bei Grilon® ELX handelt es sich um ein Polyetheramid mit Polyamid 6 Hartblöcken. Bei dem Produkt Grilamid® ELY handelt es sich um ein Polyetheramid mit Polyamid 12 Hartblöcken.

Gemäß einer besonders bevorzugten Ausführungsform der Erfindung wird als Material für die Außenschicht ein Blend aus Polyamid 12 (Komponente A) mit einem Polyamid 6-Polyetheramid (Komponente B) sowie einem Schlagzähmodifikator, welcher als Verträglichkeitsvermittler wirkt, eingesetzt. Als alternative bevorzugte Varianten wird als Gemisch für die Außenschicht ein Polyamid 12 mit einem Polyamid 12-Polyetheramid, oder alternativ ein Polyamid 6 mit einem Polyamid 12-Polyetheramid und gegebenenfalls einem Schlagzähmodifikator, welcher auch als Verträglichkeitsvermittler wirken kann, oder ein Polyamid 6 mit einem Polyamid 6-Polyetheramid, oder Mischungen davon eingesetzt.

Die erfindungsgemäße Polyamid-Extrusions-Formmasse enthält bevorzugt einen Schlagzähmodifikator, welcher auch als Verträglichkeitsvermittler wirken kann, wobei dieser in einem Anteil im Bereich von 0 bis 35 Gew.-% vorliegt, bezogen auf das Gewicht der Gesamtformmasse. Ganz besonders vorteilhaft ist ein Anteil von 5 bis 35 Gew.-%, insbesondere bevorzugt ein Anteil von 8 bis 30 Gew.-%, speziell bevorzugt von 12 bis 25 Gew.-%. Als Schlagzähmodifikatoren kommen Elastomere oder Kautschuke in Frage. Solche Kautschuke sind unter anderem beschrieben in EP 0 654 505 A1, von Seite 4, Zeile 38, bis Seite 5, Zeile 58, und aufgrund dieser ausführlichen Aufzählung dem Fachmann bestens bekannt. Gemeinsam ist solchen Schlagzähmodifikatoren, dass sie einen elastomeren Anteil enthalten und mindestens eine funktionelle Gruppe aufweisen, die mit dem Polyamid reagieren kann, beispielsweise eine Carbonsäure- oder Carbonsäureanhydridgruppe.

Die Herstellung von Schlagzähmodifikatoren geschieht durch Aufpfropfen oder Copolymerisieren der Ausgangspolymeren mit geeigneten reaktiven Verbindungen wie Maleinsäureanhydrid, (Meth-)Acrylsäure oder Glycidyl(meth)acrylat. Oft kann man deshalb Schlagzähmodifikatoren als gepfropfte Copolyolefine umschreiben. Es können auch Mischungen verschiedener Schlagzähmodifikatoren eingesetzt werden.

Schlagzähmodifikatoren können natürlich auch in der Formmasse einer auf Polyamid basierenden Innenschicht enthalten sein. Bevorzugte Innenschichtmaterialien entsprechen den Innenschichten der bereits zitierten EP 1 452 307 A1 oder der GB 2 390 658 B.

Als weitere Additive für die Innen- und/oder Außenschicht kommen außerdem Flammschutzzusätze, Pigmente, Stabilisatoren, Verstärkungsmittel (z.B. Glasfasern), Weichmacher, mineralische Füllstoffe wie Kaolin oder Tonmineralien (Schichtsilikate), oder insbesondere für die innerste Schicht auch Zusätze zur Gewährleistung einer elektrischen Leitfähigkeit, d.h. antistatische Additive (z.B. Leitruß oder Karbonfasern oder Graphitfibrillen bzw. Kohlenstoff-Nanoröhrchen) in Frage. Diese Additive machen aber bevorzugtermaßen insgesamt nicht mehr als 50 Gew.-% der gesamten Formmasse aus, wobei Flammschutzmittel bis zu 15 Gew.-% ausmachen können. In bevorzugten Ausführungsformen ist in der Innen- und/oder Außenschicht ein Weichmacher in einem Anteil von 5 bis 20 Gew.-%, besonders bevorzugt in einem Anteil von 10 bis 15 Gew.-%, bezogen auf das Gewicht der Gesamtformmasse, enthalten.

Als Barriereschicht auf der Innenseite der erfindungsgemäßen Außenschicht bzw. zwischen der Außen- und einer optionalen Innenschicht kann bevorzugt eine Zwischenschicht auf Basis von Ethylen/Vinylalkohol-Copolymer (EVOH) verwendet werden. Es ist aber auch möglich, Barriereschichten auf Basis von Fluorpolymeren oder Copolymeren von Fluorpolymeren, Polyphenylensulfiden, teilaromatischen Polyestern wie z.B. PBT oder PEN, teilaromatischen Polyamiden, wie z.B. Polyphthalamiden oder auf MXDA basierenden Polyamiden, flüssigkristallinen Polymeren (LCP), Metallfolien, Metallrohre oder anderen dem Fachmann bekannten Barrierematerialien einzusetzen. Diese Barriereschichten können gegebenenfalls auch miteinander in verschiedenen Schichten des Mehrschichtverbunds vorhanden sein. Der Mehrschichtverbund kann selbstverständlich auch noch weitere Zwischenschichten, z.B. Haftvermittlerschichten, enthalten.

Alle erwähnten Polymere oder Metalle, welche für die Barriereschicht in Betracht kommen, sind eher steife Materialien, weshalb es besonders bevorzugt ist einen Mehrschichtverbund mit guter Verbundhaftung zwischen den einzelnen Schichten zu erhalten, welcher in seiner Gesamtkombination eine hohe Reißdehnung besitzt für die weiteren Verarbeitungsschritte nach dem Extrusionsprozess, insbesondere für den Thermoformprozess.

In einer besonders bevorzugten Ausführungsform basiert die Barriereschicht auf Ethylen/Vinylalkohol-Copolymeren (EVOH). In einer weiteren bevorzugten Ausführungsform ist es möglich, die optionale Innenschicht unmittelbar an die Barriereschicht grenzen zu lassen. Polyamide, welche für die optionale Innenschicht in Frage kommen, sind solche, wie sie beim Beschrieb der Komponente (A) auch schon erwähnt wurden. Bevorzugt sind dabei Polyamide oder Polymermischungen, welche inhärente Hafteigenschaften zu der besonders bevorzugten Ausführungsform mit einer Barriereschicht aus EVOH haben, wie in der EP 1 452 307 A1 oder EP 1 162 061 B1 beschrieben. Besonders bevorzugte Polyamide sind PA 6, PA 66, PA 610, PA 612 und Mischungen davon, bzw. gemäß EP 1 452 307 A1 eine Mischung aus PA 6, PA 12 und einem Verträglichkeitsvermittler. Ganz besonders bevorzugt ist die Innenschicht aus Polyamid 610 oder Polyamid 612 oder einer Mischung aus Polyamid 610 und Polyamid 6 und/oder Polyamid-Elastomeren mit Polyamid 6 Hartsegmenten gebildet.

Im Falle einer Barriereschicht auf Basis von Ethylen/Vinylalkohol-Copolymeren (EVOH) enthält die Barriereschicht bevorzugt wenigstens 80 Gew.-% Ethylen/Vinylalkohol-Copolymere (EVOH). Zur Erhöhung der Spannungsrissbeständigkeit für extreme Beanspruchungen ist es von Vorteil, wenn die Barriereschicht auf Basis von Ethylen/Vinylalkohol-Copolymeren (EVOH) bis zu 20 Gew.-% flexibilisierend wirkende Polymere, bevorzugt Copolyamid 6/12 und/oder Ethylen-Vinylacetat-Copolymer (EVA), enthält.

Es ist auch möglich, weitere Schichten zwischen der Innenschicht und/oder der Barriereschicht vorzusehen. Eine derartige weitere Zwischenschicht zwischen der Innenschicht und einer bevorzugt aus Ethylen/Vinylalkohol-Copolymeren gebildeten Barriereschicht kann bevorzugterweise aus einem Material auf Basis von Polyamid 6, auf Basis eines Copolymeren wie z.B. Copolyamid 6/12, oder auf Basis eines Polyolefins, welches bevorzugt funktionalisiert ist, oder Mischungen davon, bestehen. Weiterhin kann eine zusätzliche Zwischenschicht zwischen der Barriereschicht, bevorzugt aus Ethylen/Vinylalkohol-Copolymeren, und dem als Außenschicht verwendeten Polyamid-Blend vorgesehen werden, welche zusätzliche Zwischenschicht aus der gleichen Gruppe von Polymeren ausgewählt ist wie die mögliche innere Zwischenschicht.

Gemäß einer besonders bevorzugten Ausführungsform grenzt die Barriereschicht direkt an die Außenschicht. Wenn die optionale Innenschicht auch unmittelbar an die Barriereschicht grenzt, kann, wie bereits oben ausgeführt wurde, ein besonders wirtschaftlicher Dreischicht-Aufbau erhalten werden.

Eine weitere bevorzugte Ausführungsform der Erfindung zeichnet sich dadurch aus, dass die optionale Innenschicht oder direkt die Barriereschicht über elektrisch leitfähige Zusätze verfügt. Es ist aber auch möglich, an der inneren Schicht noch eine weitere innerste Schicht aus Materialien mit elektrisch leitfähigen Zusätzen vorzusehen. Als elektrisch leitfähige Zusätze können beispielsweise Carbonfasern oder Leitruß, Ruß, Graphitfasern, KohlenstoffNanoröhrchen, Metallpulver oder -fasern eingesetzt werden. Solche Zusätze sind dem Fachmann bekannt, außerdem auch die Mengen, in denen diese eingesetzt werden.

Alle möglichen vorkommenden Schichten des Mehrschichtaufbaus können über Anteile an weiteren Zusätzen, wie Weichmachern, Pigmenten, Schlagzähmodifikatoren (wie sie bereits weiter oben beschrieben wurden), Hitze- und Lichtstabilisatoren, Verstärkungsmittel, Verträglichkeitsvermittler, oder Mischungen davon verfügen.

Weiterhin können aber auch Additive vorgesehen sein, die die Permeation verringern, wie z.B. Nanofüllstoffe (Schichtsilikate) oder andere mineralische Füllstoffe.

Typischerweise verfügt der erfindungsgemäße Mehrschichtverbund in Form eines Hohlprofils, wie beispielsweise einem Kraftstoffrohr, über einen Außendurchmesser von 8 mm und eine Wanddicke von ca. 1 mm, die Innenschicht über die Dicke im Bereich von 0,25 bis 0,45 mm, die Barriereschicht aus bevorzugt EVOH über eine Dicke im Bereich von 0,10 bis 0,3 mm und die Außenschicht über eine Dicke im Bereich von 0,65 bis 0,35 mm. Das Hohlprofil kann wenigstens abschnittsweise weiterhin gewellt bzw. als Wellrohr ausgebildet sein.

Weiterhin betrifft die vorliegende Erfindung ein Verfahren zur Herstellung eines mehrschichtigen Hohlprofils, insbesondere einem thermoplastischen Mehrschichtverbund, wie dies oben beschrieben wurde. Dabei wird die optionale Innenschicht, die Barriereschicht und die Außenschicht und gegebenenfalls weitere Zwischenschichten zwischen der Barriereschicht und der Außenschicht und/oder der optionalen Innenschicht in einem vorzugsweise kontinuierlichen Prozess, insbesondere bevorzugt zu einem Rohr bzw. zu einer Leitung zusammengefügt, wobei gegebenenfalls noch Wellungen aufgebracht werden, gegebenenfalls gefolgt von einem thermischen Umformungsschritt. Dabei können Verfahren wie Coextrusion, Ummantelung, Tandemextrusion oder ähnliche Verfahren zur Anwendung kommen.

Die erfindungsgemäßen Mehrschichtrohre oder -schläuche können im Kraftfahrzeugbereich z.B. als Kraftstoffleitungen, Bremsluftleitungen, Druckluftleitungen, Hydraulikleitungen, Kupplungsleitungen und Kühlleitungen eingesetzt werden.

Die Erfindung wird nun anhand der folgenden Beispiele näher beschrieben, ohne sie zu beschränken.

**Beispiele und Vergleichsbeispiele**

**Tabelle 1: Verwendete Polyamide und Polyamid-Elastomere**

| Polyamid-Typ | Beschreibung |
|---|---|
| Grilamid® L25*) | hochviskoses Polyamid 12 |
| Grilamid® L16*) | mittelviskoses Polyamid 12 |
| Grilon® F34*) | mittelviskoses Polyamid 6 |
| Grilon® XE 3871*) | Polyetheramid mit PA 6 Hartblöcken |
| Grilamid® XE 3908*) | mittelviskoses PA612 |

(fortgesetzt)

| Polyamid-Typ | Beschreibung |
|---|---|
| Grilamid® XE 1306*) | mittelviskoses PA610 |
| Grilamid® XE 3928*) | mittelviskoses PA610 |
| *) Handelsprodukte der Firma EMS-CHEMIE AG, Domat/Ems, Schweiz | |

Eingesetzte Materialien:

**Polyamide und Polyamid-Elastomere:**

Die Polyamide wurden mittels dem Fachmann bekannten Herstellverfahren hergestellt.

**Ethylen/Vinylalkohol-Copolymer (EVOH):**

Als Material für die Barriereschicht wurde ein Ethylen/Vinylalkohol-Copolymer (EVOH) verwendet. Bei den Ausführungsbeispielen handelte es sich um ein Produkt der Firma KURARAY, welches unter dem Namen EVAL® unter der Produktkennzeichnung F101A erhältlich ist und einen Ethylen-Gehalt von 32 mol-% aufweist. Es ist in Europa erhältlich bei der Firma EVAL Europe N.V. in Zwijindrecht, Belgien.

**Schlagzähmodifikator:**

Als Schlagzähmodifikator, welcher gleichzeitig auch als Verträglichkeitsvermittler wirken kann, wurde erfindungsgemäß ein besonderes säuremodifiziertes Ethylen/α-Olefin-Copolymer eingesetzt, nämlich ein mit Maleinsäureanhydrid gepfropftes Ethylen-Propylen-Copolymer. Sein MVR-Wert (gemessen bei 275°C/5kg) lag bei 13 cm$^3$/10min, und sein DSC-Schmelzpunkt bei 55°C.

**Weichmacher:**

Als Weichmacher wurde BBSA (N-Butylbenzolsulfonamid) verwendet.

**Stabilisatoren:**

  Irganox® 245: Handelsprodukt der Firma Ciba Speciality Chemicals, Basel, Schweiz:

    Triethylenglycol Bis(3-(3'-tert-butyl-4'-hydroxy-5'-methylphenyl)propionat

  Hostanox® PAR24: Handelsprodukt der Firma Clariant, Basel, Schweiz:

    Tris(2,4-di-tert-butylphenyl)phosphit

**Leitfähigkeitsadditive:**

Als Leitfähigkeitsadditiv wurde ein Masterbatch auf Basis von Polyamid 12 mit 30 Gew.-% Kohlenstoffnanoröhrchen verwendet. Dieses Produkt ist ein Handelsprodukt der Firma Hyperion Catalysis Inc.

Die in der folgenden Tabelle 2 bezeichneten Formmassen für die Außenschicht wurden auf einem Zweischneckenkneter ZSK30 der Firma Werner und Pfleiderer bei Temperaturen zwischen 240 und 300°C hergestellt. Dabei wurden Polymere, Schlagzähmodifikator, Weichmacher und Stabilisatoren in den Einzug des Extruders dosiert. Als Stabilisatoren kam jeweils eine Mischung aus Irganox® 245 mit 0,7 Gew.-% und Hostanox® PAR24 mit 0,3 Gew.-%, bezogen auf 100 Gew.- % Compound (Gesamtformmasse) zum Einsatz.

**Tabelle 2: Formmassen für die Außenschicht**

| Komponenten | Einheit | FE8072 | Z6509 | Z7844 | Z8262 | Z8263 |
|---|---|---|---|---|---|---|
| Grilamid L25 | Gew.-% | 42 | 42,5 | 39,5 | 39,125 | - |
| Grilamid L16 | Gew.-% | - | - | - | - | 39,125 |
| Grilon F34 | Gew.-% | 42 | 42,5 | - | - | - |
| Grilon XE 3871 | Gew.-% | - | - | 39,5 | 39,125 | 39,.125 |
| Schlagzähmodifikator | Gew.-% | 15 | 15 | 20 | 20 | 20 |
| Stabilisatormischung | Gew.-% | 1 | - | 1 | 1 | 1 |
| Schwarzmasterbatch | Gew.-% | - | - | - | 0,75 | 0,75 |

Die in der folgenden Tabelle 3 bezeichneten Formmassen (Innenschicht) wurden auf einem Zweischneckenkneter ZSK25 der Firma Werner und Pfleiderer bei Temperaturen von 240 bis 300°C hergestellt. Dabei wurden Polymere, Verträglichkeitsvermittler, Weichmacher und Stabilisatoren in den Einzug des Extruders dosiert.

**Tabelle 3: nicht antistatische Formmassen für die Innenschicht**

| Komponenten | Einheit | W6994 | Z7837 | Z7838 | Z7839 | Z7873 | Z8312 | W9874 |
|---|---|---|---|---|---|---|---|---|
| Grilamid L25 | Gew.-% | - | - | - | - | 39 | - | - |
| Grilamid XE 1306 | Gew.-% | - | - | - | - | - | 69,5 | 58,5 |
| Grilamid XE 3928 | Gew.-% | - | 83 | 90 | - | - | - | - |
| Grilamid XE 3908 | Gew.-% | - | - | - | 90 | - | - | - |
| Grilon F34 | Gew.-% | 83 | - | - | - | 39 | - | 5 |
| Grilamid XE 3871 | Gew.-% | - | - | - | - | - | - | 5 |
| Schlagzähmodifikator | Gew.-% | 10 | 10 | 10 | 10 | 15 | 20 | 20 |
| Weichmacher | Gew.-% | 7 | 7 | - | - | 6 | 10 | 11 |
| Stabilisator | Gew.-% | - | - | - | - | 1 | 0,5 | 0,5 |

Die in der folgenden Tabelle 4 bezeichneten antistatischen Formassen (Innenschicht) wurden auf einem Zweischneckenkneter ZSK25 der Firma Werner und Pfleiderer bei Temperaturen zwischen 240 und 300°C hergestellt. Dabei wurden Polymere, Verträglichkeitsvermittler, Kohlenstoffnanoröhrchen-Masterbatch, Weichmacher und Stabilisatoren in den Einzug des Extruders dosiert.

**Tabelle 4: antistatische Formmassen für die Innenschicht**

| Komponenten | Einheit | PA6 / PA12 ESD | PA610 W ESD |
|---|---|---|---|
| Grilamid L25 | Gew.-% | 27,5 | - |
| Grilon F34 | Gew.-% | 27,5 | - |
| Grilamid XE 3928 | Gew.-% | - | 48 |
| Weichmacher | Gew.-% | - | 7 |
| Verträglichkeitsvermittler | Gew.-% | 15 | 15 |
| Leitfähigkeitsadditiv | Gew.-% | 30 | 30 |

Rohre bzw. Leitungen gemäß den in Tabelle 5 beschriebenen Schichtaufbauten wurden in einem Coextrusionsprozess auf einer üblichen Rohrextrusionsanlage hergestellt, wobei die einzelnen Schichten im wesentlichen gleichzeitig als ein Mehrschichtverbund extrudiert wurden. Der Coextrusionsprozess wird dann besonders einfach, wenn die Leitung nur drei Schichten aufweist.

In der folgenden Tabelle 5 sind die erfindungsgemäßen Schichtaufbauten B1 - B9, sowie die als Vergleich dienenden Schichtaufbauten (Vergleichsbeispiele gemäß Stand der Technik) VB1-VB4 dargestellt:

**Tabelle 5: Schichtaufbauten**

| | | | | |
|---|---|---|---|---|
| **Rohre 8*1 mm (8 mm Außendurchmesser, 1 mm Wanddicke)** | | | | |
| | **Innenschicht** | **Zwischenschicht** | **Barriereschicht** | **Außenschicht** |
| VB1 | Z7873 | - | EVOH | FE8072 |
| VB2 | W6994 | - | EVOH | Z6509 |
| VB3 | Z6509 | - | EVOH | Z6509 |
| VB4 | PA6/PA12 ESD | W6994 | EVOH | Z6509 |
| B1 | Z7873 | - | EVOH | Z7844 |
| B2 | Z7837 | - | EVOH | Z6509 |
| B3 | Z7838 | - | EVOH | Z6509 |
| B4 | Z7839 | - | EVOH | Z6509 |
| B5 | PA610 W ESD | W6994 | EVOH | Z6509 |
| B6 | PA610 W ESD | Z7838 | EVOH | Z6509 |
| B7 | Z8312 | - | EVOH | Z8262 |
| B8 | Z8312 | - | EVOH | Z8263 |
| B9 | W9874 | - | EVOH | Z8263 |

Die beschriebenen Rohraufbauten B1 und VB1 wurden im Coextrusionsprozess mit verschiedenen Abzugsgeschwindigkeiten (Extrusionsgeschwindigkeiten) und entsprechenden Materialdurchsätzen hergestellt. An den hergestellten Mehrschichtrohren wurde die Reißdehnung nach folgender Vorschrift bestimmt: Reißdehnung gemäß DIN EN ISO 527-2 (gemäß Vorgabe Volkswagen Spezifikation TL 524 35). Die Dehnung $\varepsilon$ ist die Längenänderung $\Delta L = L - L_0$ in mm, bezogen auf die ursprüngliche Messlänge $L_0$ in mm ($\varepsilon = \dfrac{\Delta L}{L_0}$) und wird als Prozentwert ausgedrückt (siehe bereits zitiertes Kunststoff-Kompendium, Vogel-Verlag, 1988, Seite 239 "Kennwerte"). Die Reißdehnung $\varepsilon_R$ ist die Dehnung im Augenblick des Reißens.

In der folgenden Tabelle 6 sind die Abzugsgeschwindigkeiten bei der Rohrextrusion und die Resultate der Reißdehnungsmessung dargestellt.

**Tabelle 6: Reißdehnung in Abhängigkeit von der Abzugsgeschwindigkeit**

| | | |
|---|---|---|
| **Rohre 8*1 mm (8 mm Außendurchmesser, 1 mm Wanddicke)** | | |
| | **Abzugsgeschwindigkeit [m/min]** | **Reißdehnung [%]** |
| VB1 | 20 | 165 |
| VB1 | 40 | 130 |
| VB1 | 60 | 110 |
| B1 | 20 | 210 |
| B1 | 40 | 230 |
| B1 | 60 | 250 |

Die erhaltenen Resultate der Vergleichsbeispiele zeigen schon bei einer Extrusionsgeschwindigkeit von 20 m/min, dass die Reißdehnungsspezifikation gemäß VW TL 524 35, in welcher eine Reißdehnung von > 200 % gefordert wird, nicht erreicht wird. Alle erfindungsgemäßen Beispiele hingegen erfüllen diese Anforderung, und sogar ohne Probleme bei erhöhten Geschwindigkeiten.

Alle Vergleichsbeispiele und erfindungsgemäßen Beispiele bestehen übrigens den Kälteschlag-Test nach VW TL 524 35.

Die Testresultate der Tabelle 6 zeigen in überzeugender Weise, wie mit der vorliegenden Erfindung, d.h. der entsprechenden Außenschicht-Zusammensetzung, die Qualität entsprechender Mehrschichtverbunde signifikant verbessert und dabei erst noch die Produktivität bzw. der Ausstoß einer Extrusionsanlage enorm erhöht werden kann. Die Erfindung ermöglicht also eine große Steigerung der Wirtschaftlichkeit bei der Herstellung von mehrschichtigen Rohren.

An den in Tabelle 5 beschriebenen Rohraufbauten B2 - B9 uns VB2 - VB4 wurden folgende Tests durchgeführt:

Kälteschlag-Test nach SAE J2260 Absatz 7.5, sowie Berstdruck Absatz 7.1.
Zinkchloridtest: Test nach SAE J2260 Absatz 7.5, Resistance to Zinc Chloride, respektive Ford WSS-M 98D33-A3 Absatz 3.4.5, Resistance to Zinc Chloride.
Sourgastest: Test nach SAE J2260 Absatz 7.8, Auto-Oxidised Gasoline (Kälteschlag (-40°C) nach Lagerung PN90 1000h bei 40°C).
Auswaschbeständigkeit: Test nach VW TL52435, Absatz 6. Prüfung der Auswaschbarkeit eines Mehrschichtrohres nach Lagerung FAM B (72h/60°C) Das Prüfmedium FAM B darf nach der Lagerung keine Ausflockung oder Trübung enthalten.

In der folgenden Tabelle 7 sind die Resultate des Kälteschlag-Tests, Sourgastests, Zinkchloridtests und die Auswaschbeständigkeit dargestellt. + bedeutet, dass der Test bestanden wurde, - steht für ein Versagen in dem Test.

**Tabelle 7: Testresultate**

| Rohre 8*1 mm (8 mm Außendurchmesser, 1 mm Wanddicke) | | | | |
|---|---|---|---|---|
| | Kälteschlag [% Bruch], 0% erforderlich | SAE $ZnCl_2$-Beständigkeit | SAE Sourgasbeständigkeit | Auswaschbeständigkeit |
| VB2 | - | - | - | - |
| VB3 | + | + | + | - |
| VB4 | + | + | + | - |
| B2 | + | + | + | + |
| B3 | + | + | + | + |
| B4 | + | + | + | + |
| B5 | + | + | + | + |
| B6 | + | + | + | + |
| B7 | + | + | + | + |
| B8 | + | + | + | + |
| B9 | + | + | + | + |

Die Tabelle 7 zeigt auf, dass die Beispiele 2-9 alle Tests erfolgreich bestehen und sich somit auch durch die Auswaschbeständigkeit sowie die Sourgasbeständigkeit gegenüber den aus dem Stand der Technik bekannten Lösungen abgrenzen.

**Patentansprüche**

1. Mehrschichtverbund, insbesondere thermoplastischer Mehrschichtverbund, in Form eines extrudierten Hohlprofils, umfassend eine thermoplastische Aussenschicht und mindestens eine weitere Schicht, wobei die Aussenschicht aus einer Mischung auf Basis von

    (A) 80 bis 20 Gewichtsteilen von wenigstens einem Polyamid (PA) und
    (B) 20 bis 80 Gewichtsteilen von wenigstens einem Polyamid-Elastomeren (TPE-A), ausgewählt aus der Gruppe der Polyetheramide, der Polyetheresteramide, der Polyetheresteretheramide und Gemischen daraus, wobei die Summe von (A) und (B) 100 Gewichtsteile ergibt,

gebildet ist, und das Hohlprofil bei Extrusionsgeschwindigkeiten von über 20 m/min hergestellt wurde, so dass das hergestellte Hohlprofil eine höhere Reissdehnung von über 200% aufweist, verglichen mit einem sonst gleichen, aber bei niedrigeren Extrusionsgeschwindigkeiten hergestellten Hohlprofil, sowie auch im Vergleich zu einem bei gleicher Extrusionsgeschwindigkeit hergestellten Hohlprofil mit einer Polyamid-Aussenschicht ohne Polyamid-Elastomer-Zusatz, wobei die Reissdehnung am fertigen Hohlprofil gemäss DIN EN ISO 527-2 gemessen wird.

2. Mehrschichtverbund gemäss Anspruch 1 in Form eines extrudierten Hohlprofils für den Kraftfahrzeugbereich.

3. Mehrschichtverbund gemäss Anspruch 1 oder 2, wobei die weitere Schicht eine Barriereschicht ist.

4. Mehrschichtverbund gemäss Anspruch 2 oder 3, wobei das Hohlprofil in Form eines Rohres vorliegt, insbesondere in Form einer Kraftstoffleitung für flüssige Kraftstoffe.

5. Mehrschichtverbund gemäss einem der Ansprüche 1 bis 4, weiterhin enthaltend eine oder mehrere Innen- oder Zwischenschichten, die insbesondere leitfähig ausgebildet sein können oder die Haftung der einzelnen Schichten zueinander verbessern.

6. Mehrschichtverbund gemäss Anspruch 1 bis 5, **dadurch gekennzeichnet, dass** das Hohlprofil ein Mehrschichtrohr oder ein Mehrschichtschlauch ist.

7. Mehrschichtverbund gemäss Anspruch 1 bis 4, **dadurch gekennzeichnet, dass** das Hohlprofil wenigstens teilweise gewellte Bereiche aufweist und insbesondere ein Mehrschicht-Wellrohr oder Rohr mit Wellrohrsegmenten ist.

8. Mehrschichtverbund gemäss Anspruch 1 bis 7, **dadurch gekennzeichnet, dass** das Polyamid (PA) für die Komponente (A) der Aussenschicht aus aliphatischen Lactamen und/oder -Aminocarbonsäuren mit 4 bis 44 Kohlenstoffatomen, bevorzugt 4 bis 18 Kohlenstoffatomen, und/oder solche aus aromatischen Aminocarbonsäuren mit 6 bis 20 Kohlenstoffatomen und/oder mindestens einem Diamin und mindestens einer Dicarbonsäure mit jeweils 2 bis 44 Kohlenstoffatomen aufgebaut ist.

9. Mehrschichtverbund gemäss Anspruch 8, **dadurch gekennzeichnet, dass** als Diamine solche Diamine ausgewählt sind aus der Gruppe aus Ethylendiamin, 1,4-Diaminobutan, 1,6-Diaminohexan, 1,10-Diaminodecan, 1,12-Diaminodo-decan, mund p-Xylylendiamin, Cyclohexyldimethylenamin, Bis-(aminocyclohexyl)methan und seine Alkylderivate und
wobei die Dicarbonsäure ausgewählt ist aus Dicarbonsäuren aus der Gruppe aus Bernstein-, Glutar-, Adipin-, Pimelin-, Kork-, Azelain- und Sebacinsäure, Dodecandisäure, Dimerfettsäuren mit 36 oder 44 Kohlenstoffatomen, 1,6-Cyclohexandicarbonsäure, Terephthalsäure, Isophthalsäure und Naphthalindicarbonsäure.

10. Mehrschichtverbund gemäss einem der Ansprüche 1 bis 9, **dadurch gekennzeichnet, dass** die Polyamid-Komponente (A) der Aussenschicht ausgewählt ist aus der Gruppe, bestehend aus Polyamid 6, Polyamid 66, Polyamid 69, Polyamid 9, Polyamid 10, Polyamid 11, Polyamid 12, Polyamid 610, Polyamid 611, Polyamid 612, Polyamid 613, Polyamid 614, Polyamid 618, Polyamid 1211, Polyamid 1010, Polyamid 1212, Polyamid 1012 und Gemischen daraus.

11. Mehrschichtverbund gemäss Anspruch 1, wobei das Polyamid-Elastomere (TPE-A) für die Komponente (B) der Aussenschicht **gekennzeichnet ist durch** den Einbau von flexiblen Polyether- oder Polyolefin-Segmenten in Polyamid-Blockpolymere.

12. Mehrschichtverbund gemäss Anspruch 11, wobei das Polyamid-Elastomere (TPE-A) **gekennzeichnet ist durch** den Einbau von Dimerdiol und/oder Polycaprolacton und/oder Polyetherdiaminen und/oder Polyetherdiolen als Weichblock.

13. Mehrschichtverbund gemäss Anspruch 1 oder 11, wobei das Polyetherrückgrat aus Polypropylenglykol (PPG), Polytetramethylglykol (PTMEG), Polybutylenglykol (PBG), Polyethylenglykol (PEG), Polyneopentylglykol (PNPG) und/oder deren Mischungen und/oder deren Copolymeren und/oder deren Blockpolymeren besteht.

14. Mehrschichtverbund gemäss einem der vorhergehenden Ansprüche 1 bis 13, **dadurch gekennzeichnet, dass** die Mischung, enthaltend die Komponenten PA (A) und TPE-A (B), weiterhin eine oder mehrere Zusätze enthält, ausgewählt aus der Gruppe der Weichmacher, der Pigmente, der Füllstoffe, der Schlagzähmodifikatoren, welche insbesondere auch als Verträglichkeitsvermittler wirken können, insbesondere säuremodifiziertes Ethylen/ -Olefin-Copolymer, der Hitze- und Licht-Stabilisatoren, der Verstärkungsmittel, oder Mischungen davon.

15. Mehrschichtverbund gemäss einem der vorhergehenden Ansprüche 1 bis 14, **dadurch gekennzeichnet, dass** das Gemisch für die Aussenschicht Polyamid 12 (A) sowie Polyamid 6-Polyetheramid (B) und einen als Verträglichkeitsvermittler wirkenden Schlagzähmodifikator enthält.

16. Mehrschichtverbund gemäss einem der vorhergehenden Ansprüche 1 bis 15, **dadurch gekennzeichnet, dass** das Gewichtsverhältnis der Komponenten PA (A) zu TPE-A (B) im Gemisch der Aussenschicht 1 : 1 beträgt.

17. Mehrschichtverbund gemäss einem der vorhergehenden Ansprüche 1 bis 16, **dadurch gekennzeichnet, dass** der Schlagzähmodifikator in einem Anteil von 5 bis 35 Gew.-%, bevorzugt in einem Anteil von 8 bis 30 Gew.-%, im Gemisch aus (A) und (B) enthalten ist, bezogen auf das Gewicht der Gesamtformmasse.

18. Mehrschichtverbund gemäss einem der vorhergehenden Ansprüche 1 bis 17, **dadurch gekennzeichnet, dass** die mindestens eine Barriereschicht gebildet ist aus Materialien auf Basis von Ethylen/Vinylalkohol-Copolymeren (EVOH), oder auf Basis von Fluorpolymeren, oder Polyphenylensulfiden, oder flüssigkristallinen Polyestern, oder teilaromatischen Polyamiden, oder teilaromatischen Polyestern, oder Metallen.

19. Mehrschichtverbund gemäss Anspruch 18, **dadurch gekennzeichnet, dass** die Barriereschicht auf Basis von Ethylen/Vinylalkohol-Copolymeren (EVOH) wenigstens 80 Gew.-% Ethylen/Vinylalkohol-Copolymere (EVOH) enthält.

20. Mehrschichtverbund gemäss Anspruch 19, **dadurch gekennzeichnet, dass** die Barriereschicht auf Basis von Ethylen/Vinylalkohol-Copolymeren (EVOH) bis zu 20 Gew.-% flexibilisierend wirkende Polymere, bevorzugt Copolyamid 6/12 und/oder Ethylen-Vinylacetat-Copolymer (EVA), enthält.

21. Mehrschichtverbund gemäss einem der Ansprüche 1 bis 20, **dadurch gekennzeichnet, dass** er weiterhin eine Polyamid-Innenschicht aufweisen kann, die unmittelbar an die Barriereschicht angrenzend ausgebildet ist und andererseits unmittelbar an einen durch den Hohlkörper gebildeten Innenraum grenzt, wobei die Innenschicht auf Basis von Polyamid gebildet ist, ausgewählt aus der Gruppe aus Polyamid 6, Polyamid 66, Polyamid 69, Polyamid 9, Polyamid 10, Polyamid 11, Polyamid 12, Polyamid 610, Polyamid 611, Polyamid 612, Polyamid 613, Polyamid 614, Polyamid 618, Polyamid 1211, Polyamid 1010, Polyamid 1212, Polyamid 1012 und Gemischen daraus, wobei Polyamid 610 oder Polyamid 612 oder eine Mischung aus Polyamid 6 und Polyamid 12 und einem als Verträglichkeitsvermittler wirkenden Schlagzähmodifikator bevorzugt sind.

22. Mehrschichtverbund gemäss Anspruch 21, **dadurch gekennzeichnet, dass** die Innenschicht aus Polyamid 610 oder Polyamid 612 oder einer Mischung aus Polyamid 610 und Polyamid 6 und/oder Polyamid-Elastomeren mit Polyamid 6 Hartsegmenten gebildet ist.

23. Mehrschichtverbund nach einem der Ansprüche 1 bis 22, **dadurch gekennzeichnet, dass** entweder die Innenschicht antistatisch ausgerüstet ist oder eine weitere innerste leitfähig ausgestattete Innenschicht vorgesehen ist, die unmittelbar an die erste Innenschicht angrenzend ausgebildet ist und an einen durch das Hohlprofil gebildeten Innenraum grenzt.

24. Mehrschichtverbund gemäss einem der Ansprüche 1 bis 23, **dadurch gekennzeichnet, dass** das Polyamid-Elastomer TPE-A (B) ausgewählt ist aus den Untergruppen, bestehend aus Polyetheramiden, Polyetheresteramiden, Polyetheresteretheramiden, wobei Polyetheramide bevorzugt sind und insbesondere Polyetheramide auf Basis von Polyamid 6 Hartblöcken und/oder auf Basis von Polyamid 12 Hartblöcken, gegebenenfalls mit Zusatz von Verträglichkeitsvermittler.

25. Mehrschichtverbund gemäss einem der Ansprüche 1 bis 24, **dadurch gekennzeichnet, dass** das Gemisch für die Aussenschicht Polyamid 12 (A) sowie Polyamid 6-Polyetheramid (B) und einen als Verträglichkeitsvermittler wirkenden Schlagzähmodifikator enthält.

26. Mehrschichtverbund gemäss einem der Ansprüche 1 bis 25, **dadurch gekennzeichnet, dass** im Gemisch für die Innen- und/oder die Aussenschicht ein Schlagzähmodifikator in einem Anteil von 5 bis 35 Gew.-%, bevorzugt in einem Anteil von 8 bis 30 Gew.-%, enthalten ist, bezogen auf das Gewicht der Gesamtformmasse.

**27.** Mehrschichtverbund gemäss einem der Ansprüche 1 bis 26, **dadurch gekennzeichnet, dass** das Verhältnis der Komponenten PA (A) : TPE-A (B) im Gemisch der Aussenschicht 1 : 1 ist.

**28.** Mehrschichtverbund nach einem der Ansprüche 1 bis 27, **dadurch gekennzeichnet, dass** die Mischungen der Innenschicht und/oder die Mischungen der Aussenschicht weitere Additive aufweisen, ausgewählt aus der Gruppe, bestehend aus Weichmachern, Pigmenten, Füllstoffen, Schlagzähmodifikatoren, welche auch als Verträglichkeitsvermittler wirken können, wie insbesondere säuremodifiziertes Ethylen/ -Olefin-Copolymer, Hitze- und Lichtstabilisatoren, Verstärkungsmittel oder Mischungen davon.

**29.** Mehrschichtverbund gemäss Anspruch 28, **dadurch gekennzeichnet, dass** in der Innen- und/oder Aussenschicht ein Weichmacher in einem Anteil von 5 bis 20 Gew.-%, bevorzugt in einem Anteil von 10 bis 15 Gew.-%, bezogen auf das Gewicht der Gesamtformmasse, enthalten ist.

**30.** Mehrschichtverbund gemäss einem der Ansprüche 1 bis 29, **dadurch gekennzeichnet, dass** die Barriereschicht auf Basis von Ethylen/Vinylalkohol-Copolymer (EVOH) oder auf Basis von Fluorpolymeren, oder Polyphenylensulfiden, oder flüssigkristallinen Polyestern, oder teilaromatischen Polyamiden, oder teilaromatischen Polyestern gebildet ist.

**31.** Verfahren zur Herstellung eines mehrschichtigen Hohlprofils nach einem der Ansprüche 1 bis 30, **dadurch gekennzeichnet, dass** die Aussenschicht sowie die weiteren Schichten in einem kontinuierlichen Verfahren, bevorzugt in einem Coextrusionsverfahren, einem Ummantelungsverfahren, oder einer Tandemextrusion zu einem Hohlprofil, insbesondere zu einem Rohr oder einem Schlauch zusammengefügt werden, wobei gegebenenfalls noch Wellungen aufgebracht werden, gegebenenfalls gefolgt von einem thermischen Umformungsschritt.

**32.** Verwendung der Mehrschichtrohre oder Mehrschichtschläuche gemäss einem der Ansprüche 2 bis 30 im Kraftfahrzeugbereich, insbesondere als Kraftstoffleitungen, Bremsluftleitungen, Druckluftleitungen, Hydraulikleitungen, Kupplungsleitungen und Kühlleitungen.

**Claims**

**1.** Multi-layer composite, particularly thermoplastic multi-layer composite, in form of an extruded hollow section, comprising a thermoplastic outer layer and at least one further layer, wherein
the outer layer is formed by a mixture based on

(A) 80 to 20 parts by weight of at least one polyamide (PA) and
(B) 20 to 80 parts by weight of at least one polyamide elastomer (TPE-A), selected from the group consisting of polyether amides, polyether ester amides, polyether ester ether amides and mixtures thereof, wherein the sum of (A) and (B) is 100 parts by weight,

and the hollow section has been produced at extrusion speeds, of over 20 m/min, so that the produced hollow section has a higher elongation at break, of over 200%, compared to an otherwise identical hollow section, which has been produced at lower extrusion speeds, and also compared to a hollow section with a polyamide outer layer without polyamide elastomer additive, which has been produced at the same extrusion speed, wherein the elongation at break is measured at the finished hollow section according to DIN EN ISO 527-2.

**2.** Multi-layer composite according to claim 1 in form of an extruded hollow section for the automotive sector.

**3.** Multi-layer composite according to claim 1, wherein the further layer is a barrier layer.

**4.** Multi-layer composite according to claim 3, wherein the hollow section has the form of a tube, optionally the form of a fuel tube for liquid fuels.

**5.** Multi-layer composite according to claim 1, further comprising one or more inner or intermediate layers, which can particularly be conductively formed or which improve adhesion of the individual layers to each other.

**6.** Multi-layer composite according to claim 1, **characterized in, that** the hollow section is a multi-layer tube or a multi-layer hose.

7.  Multi-layer composite according to claim 1, **characterized in, that** the hollow section has at least partly corrugated regions and is a multi-layer corrugated tube or tube with corrugated tube segments.

8.  Multi-layer composite according to claim 1, **characterized in, that** the polyamide (PA) for the component (A) of the outer layer is made-up from aliphatic lactams and/or [omega]-aminocarboxylic acids with 4 to 44 carbon atoms, optionally 4 to 18 carbon atoms, and/or such from aromatic aminocarboxylic acids with 6 to 20 carbon atoms and/or at least one diamine and at least one dicarboxylic acid with 2 to 44 carbon atoms, respectively.

9.  Multi-layer composite according to claim 8, **characterized in, that** such diamines are selected as diamines from the group consisting of ethylene diamine, 1,4-diamino butane, 1,6-diamino hexane, 1,10-diamino decane, 1,12-diamino dodecane, m- and p-xylylene diamine, cyclohexyl dimethylene amine, bis-(aminocyclohexyl)methane and its alkyl derivatives, and wherein the dicarboxylic acid is selected from dicarboxylic acids from the group consisting of succinic, glutaric, adipic, pimelic, suberic, azelaic and sebacic acid, dodecane dicarboxylic acid, dimer fatty acids with 36 or 44 carbon atoms, 1,6-cyclohexane dicarboxylic acid, terephthalic acid, isophthalic acid and naphthalene dicarboxylic acid.

10. Multi-layer composite according to claim 1, **characterized in, that** the polyamide component (A) of the outer layer is selected from the group consisting of polyamide 6, polyamide 66, polyamide 69, polyamide 9, polyamide 10, polyamide 11, polyamide 12, polyamide 610, polyamide 611, polyamide 612, polyamide 613, polyamide 614, polyamide 618, polyamide 1211, polyamide 1010, polyamide 1212, polyamide 1012 and mixtures thereof.

11. Multi-layer composite according to claim 1, wherein the polyamide elastomer (TPE-A) for component (B) of the outer layer is **characterized by** the insertion of flexible polyether or polyolefin segments into polyamide block polymers.

12. Multi-layer composite according to claim 11, wherein the polyamide elastomer (TPE-A) is **characterized by** the insertion of dimerdiol and/or polycaprolacton and/or polyether diamines and/or polyetherdioles as soft block.

13. Multi-layer composite according to claim 1, wherein the polyether backbone consists of polypropylene glycol (PPG), polytetramethyl glycol (PTMEG), polybutylene glycol (PBG), polyethylene glycol (PEG), Polyneopentyl glycol (PNPG) and/or their mixtures and/or their copolymers and/or their block polymers.

14. Multi-layer composite according to claim 1, **characterized in, that** the mixture, comprising the components PA (A) and TPE-A (B), further comprises one or more additives, selected from the group consisting of plasticizers, pigments, fillers, impact modifiers, which can also act as compatibilizers, particularly acid-modified ethylene/a-olefin copolymer, heat and light stabilizers, reinforcements, or mixtures thereof.

15. Multi-layer composite according to claim 1, **characterized in, that** the mixture for the outer layer comprises polyamide 12 (A) as well as polyamide 6 polyether amide (B) and an impact modifier acting as a compatibilizer.

16. Multi-layer composite according to claim 1, **characterized in, that** the weight ratio of the components PA (A) to TPE-A (B) in the mixture of the outer layer is 1:1 or about 1:1.

17. Multi-layer composite according to claim 1, **characterized in, that** the impact modifier is comprised in the mixture of (A) and (B) at a portion from 5 to 35 wt.-%, optionally in a portion from 8 to 30 wt.-% referred to the weight of the total molding material.

18. Multi-layer composite according to claim 1, **characterized in, that** the at least one barrier layer is formed from materials based on ethylene vinyl alcohol copolymers (EVOH), or based on fluoro polymers, or polyphenylene sulfides, or liquid-crystalline polyesters, or partly aromatic polyamides, or partly aromatic polyesters, or metals.

19. Multi-layer composite according to claim 18, **characterized in, that** the barrier layer based on ethylene vinyl alcohol copolymers (EVOH) comprises at least 80 wt.-% ethylene vinyl alcohol copolymers (EVOH).

20. Multi-layer composite according to claim 19, **characterized in, that** the barrier layer based on ethylene vinyl alcohol copolymers (EVOH) comprises up to 20 wt.-% flexibilizing polymers, preferably copolyamide 6/12 and/or ethylene vinyl acetate copolymer (EVA).

21. Multi-layer composite according to claim 1, **characterized in, that** it further comprises a polyamide inner layer, which is formed directly adjacent to the barrier layer and abuts directly on an inner space formed by the hollow body, wherein the inner layer is formed based on polyamide selected from the group consisting of polyamide 6, polyamide 66, polyamide 69, polyamide 9, polyamide 10, polyamide 11, polyamide 12, polyamide 610, polyamide 611, polyamide 612, polyamide 613, polyamide 614, polyamide 618, polyamide 1211, polyamide 1010, polyamide 1212, polyamide 1012 and mixtures thereof, wherein polyamide 610 or polyamide 612 or a mixture of polyamide 6 and polyamide 12 and an impact modifier acting as a compatibilizer is preferred.

22. Multi-layer composite according to claim 21, **characterized in, that** the inner layer is formed of polyamide 610 or polyamide 612 or a mixture of polyamide 610 and polyamide 6 and/or polyamide elastomers with polyamide 6 hard segments.

23. Multi-layer composite according to claim 1, **characterized in, that** either the inner layer is equipped antistatically or a further internal conductively equipped inner layer is provided, which is formed directly adjacent to the first inner layer and abuts on an inner space formed by the hollow section.

24. Multi-layer composite according to claim 1, **characterized in, that** the polyamide elastomer TPE-A (B) is selected from the sub-groups, consisting of polyether amides, polyester amides, polyether ester amides, polyether ester ether amides, wherein polyether amides are preferred and optionally polyether amides based on polyamide 6 hard blocks and/or based on polyamide 12 hard blocks, optionally with addition of a compatibilizer.

25. Multi-layer composite according to claim 1, **characterized in, that** the mixture for the outer layer comprises polyamide 12 (A) as well as polyamide 6 polyether amide (B) and an impact modifier acting as a compatibilizer.

26. Multi-layer composite according to claim 1, **characterized in, that** the mixture for the inner and/or the outer layer comprises an impact modifier in a portion of 5 to 35 wt.-%, optionally in a portion of 8 to 30 wt.-%, referred to the weight of the total molding material.

27. Multi-layer composite according to claim 26, **characterized in, that** the ratio of the components PA (A): TPE-A (B) in the mixture of the outer layer is 1: 1 or about 1:1.

28. Multi-layer composite according to claim 27, **characterized in, that** the mixtures of the inner layer and/or the mixtures of the outer layer have further additives selected from the group consisting of plasticizers, pigments, fillers, impact modifiers which can act as compatibilizers, like in particular acid-modified ethylene/[alpha]-olefin copolymer, heat and light stabilizers, reinforcements or mixtures thereof.

29. Multi-layer composite according to claim 28, **characterized in, that** in the inner and/or outer layer comprises a plasticizer in a portion from 5 to 20 wt.-%, optionally in a portion from 10 to 15 wt.-%, related to the weight of the total molding material is included.

30. Multi-layer composite according to claim 29, **characterized in, that** the barrier layer is formed based on ethylene vinyl alcohol copolymer (EVOH) or based on fluoro polymers, or polyphenylene sulfides, or liquid-crystalline polyesters, or partly aromatic polyamides, or partly-aromatic polyesters.

31. Method for producing a multilayered hollow section according to claim 1, **characterized in, that** the outer layer as well as the further layers are joined to a hollow section, optionally to a tube or a hose, in a continuous procedure, optionally in a coextrusion procedure, a coating procedure, or a tandem extrusion, wherein optionally corrugations are applied optionally followed by a thermal shaping step.

32. In a motor vehicle havening a multi-layer tube or multi-layer hoses as a fuel tube, brake air line, compressed air line, hydraulic line, clutch line or cooling line, the improvement wherein said multi-layer tube or hose is according to claim 2.

**Revendications**

1. Composite multicouche, notamment composite multicouche thermoplastique, sous la forme d'un profilé creux extrudé, comprenant une couche extérieure thermoplastique et au moins une autre couche, dans lequel
la couche extérieure est formée par un mélange à base de

(A) 80 à 20 parties en poids d'au moins un polyamide (PA) et

(B) 20 à 80 parties en poids d'au moins un élastomère de polyamide (TPE-A), choisi dans le groupe constitué par les polyéther-amides, les polyéther-ester-amides,

les polyéther-ester-éther-amides et leurs mélanges, la somme de (A) et (B) étant de 100 parties en poids, et le profilé creux a été fabriqué à des vitesses d'extrusion de plus de 20 m/min, de sorte que le profilé creux fabriqué présente un allongement à la rupture plus élevé de plus de 200 %, en comparaison d'un profilé creux autrement identique, mais fabriqué à des vitesses d'extrusion plus faibles, ainsi qu'également en comparaison d'un profilé creux fabriqué à la même vitesse d'extrusion comprenant une couche extérieure en polyamide sans ajout d'élastomère de polyamide, l'allongement à la rupture étant mesuré sur le profilé creux fini selon DIN EN ISO 527-2.

2. Composite multicouche selon la revendication 1, sous la forme d'un profilé creux extrudé pour le domaine automobile.

3. Composite multicouche selon la revendication 1 ou 2, dans lequel la couche supplémentaire est une couche de barrière.

4. Composite multicouche selon la revendication 2 ou 3, dans lequel le profilé creux se présente sous la forme d'un tube, notamment sous la forme d'une conduite de carburant pour carburant liquide.

5. Composite multicouche selon l'une quelconque des revendications 1 à 4, contenant en outre une ou plusieurs couches intérieures ou intermédiaires, qui peuvent notamment être configurées sous forme conductrice, ou qui améliorent l'adhésion des couches individuelles entre elles.

6. Composite multicouche selon les revendications 1 à 5, **caractérisé en ce que** le profilé creux est un tube multicouche ou un tuyau multicouche.

7. Composite multicouche selon les revendications 1 à 4, **caractérisé en ce que** le profilé creux comprend des zones au moins partiellement ondulées et est notamment un tube ondulé multicouche ou un tube comprenant des segments de tube ondulé.

8. Composite multicouche selon les revendications 1 à 7, **caractérisé en ce que** le polyamide (PA) pour le composant (A) de la couche extérieure est constitué de lactames et/ou d'acides aminocarboxyliques aliphatiques de 4 à 44 atomes de carbone, de préférence de 4 à 18 atomes de carbone, et/ou d'acides aminocarboxyliques aromatiques de 6 à 20 atomes de carbone et/ou d'au moins une diamine et d'au moins un acide dicarboxylique contenant chacun 2 à 44 atomes de carbone.

9. Composite multicouche selon la revendication 8, **caractérisé en ce qu'**en tant que diamines, des diamines sont choisies dans le groupe constitué par l'éthylène-diamine, le 1,4-diaminobutane, le 1,6-diaminohexane, le 1,10-diaminodécane, le 1,12-diaminododécane, la m- et p-xylylène-diamine, la cyclohexyldiméthylène-amine, le bis-(aminocyclohexyl)méthane et ses dérivés alkylés, et l'acide dicarboxylique est choisi parmi les acides dicarboxyliques du groupe constitué par l'acide succinique, glutarique, adipique, pimélique, subérique, azélaïque et sébacique, l'acide dodécanedioïque, les acides gras dimères de 36 ou 44 atomes de carbone, l'acide 1,6-cyclohexanedicarboxylique, l'acide téréphtalique, l'acide isophtalique et l'acide naphtalinedicarboxylique.

10. Composite multicouche selon l'une quelconque des revendications 1 à 9, **caractérisé en ce que** le composant polyamide (A) de la couche extérieure est choisi dans le groupe constitué par le polyamide 6, le polyamide 66, le polyamide 69, le polyamide 9, le polyamide 10, le polyamide 11, le polyamide 12, le polyamide 610, le polyamide 611, le polyamide 612, le polyamide 613, le polyamide 614, le polyamide 618, le polyamide 1211, le polyamide 1010, le polyamide 1212, le polyamide 1012 et leurs mélanges.

11. Composite multicouche selon la revendication 1, dans lequel l'élastomère de polyamide (TPE-A) pour le composant (B) de la couche extérieure est **caractérisé par** l'incorporation de segments polyéther ou polyoléfine flexibles dans le polymère séquencé de polyamide.

12. Composite multicouche selon la revendication 11, dans lequel l'élastomère de polyamide (TPE-A) est **caractérisé par** l'incorporation d'un diol dimère et/ou de polycaprolactone et/ou de polyéther-diamines et/ou de polyéther-diols en tant que séquence souple.

**13.** Composite multicouche selon la revendication 1 ou 11, dans lequel le squelette de polyéther est constitué de polypropylène glycol (PPG), de polytétraméthylglycol (PTMEG), de polybutylène glycol (PBG), de polyéthylène glycol (PEG), de polynéopentylglycol (PNPG) et/ou leurs mélanges et/ou leurs copolymères et/ou leurs polymères séquencés.

**14.** Composite multicouche selon l'une quelconque des revendications 1 à 13 précédentes, **caractérisé en ce que** le mélange, contenant les composants PA (A) et TPE-A (B), contient en outre un ou plusieurs additifs, choisis dans le groupe constitué par les plastifiants, les pigments, les charges, les modificateurs de la résistance aux chocs, qui peuvent notamment également agir en tant que promoteurs de compatibilité, notamment un copolymère d'éthylène/oléfine modifié par un acide, les thermo- et photostabilisateurs, les agents renforçants ou leurs mélanges.

**15.** Composite multicouche selon l'une quelconque des revendications 1 à 14 précédentes, **caractérisé en ce que** le mélange pour la couche extérieure contient du polyamide 12 (A), ainsi que le polyamide 6-polyétheramide (B) et un modificateur de la résistance aux chocs agissant en tant que promoteur de compatibilité.

**16.** Composite multicouche selon l'une quelconque des revendications 1 à 15 précédentes, **caractérisé en ce que** le rapport en poids entre les composants PA (A) et TPE-A (B) dans le mélange de la couche extérieure est de 1:1.

**17.** Composite multicouche selon l'une quelconque des revendications 1 à 16 précédentes, **caractérisé en ce que** le modificateur de la résistance aux chocs est contenu en une proportion de 5 à 35 % en poids, de préférence en une proportion de 8 à 30 % en poids, dans le mélange de (A) et (B), par rapport au poids du matériau de moulage total.

**18.** Composite multicouche selon l'une quelconque des revendications 1 à 17 précédentes, **caractérisé en ce que** ladite au moins une couche de barrière est formée par des matériaux à base de copolymères d'éthylène/alcool vinylique (EVOH) ou à base de polymères fluorés, ou de polysulfures de phénylène, ou de polyesters cristallins liquides, ou de polyamides partiellement aromatiques, ou de polyesters partiellement aromatiques, ou de métaux.

**19.** Composite multicouche selon la revendication 18, **caractérisé en ce que** la couche de barrière à base de copolymères d'éthylène/alcool vinylique (EVOH) contient au moins 80 % en poids de copolymères d'éthylène/alcool vinylique (EVOH).

**20.** Composite multicouche selon la revendication 19, **caractérisé en ce que** la couche de barrière à base de copolymères d'éthylène/alcool vinylique (EVOH) contient jusqu'à 20 % en poids de polymères à effet flexibilisant, de préférence de copolyamide 6/12 et/ou de copolymère d'éthylène-acétate de vinyle (EVA).

**21.** Composite multicouche selon l'une quelconque des revendications 1 à 20, **caractérisé en ce qu'**il peut en outre comprendre une couche intérieure de polyamide, qui est formée directement adjacente à la couche de barrière et qui est directement bordée de l'autre côté par une chambre intérieure formée par le corps creux, la couche intérieure étant formée à base d'un polyamide, choisi dans le groupe constitué par le polyamide 6, le polyamide 66, le polyamide 69, le polyamide 9, le polyamide 10, le polyamide 11, le polyamide 12, le polyamide 610, le polyamide 611, le polyamide 612, le polyamide 613, le polyamide 614, le polyamide 618, le polyamide 1211, le polyamide 1010, le polyamide 1212, le polyamide 1012 et leurs mélanges, le polyamide 610 ou le polyamide 612 ou un mélange de polyamide 6 et de polyamide 12 et d'un modificateur de la résistance aux chocs agissant en tant que promoteur de compatibilité étant préférés.

**22.** Composite multicouche selon la revendication 21, **caractérisé en ce que** la couche intérieure est formée par du polyamide 610 ou du polyamide 612 ou un mélange de polyamide 610 et de polyamide 6 et/ou d'élastomères de polyamide avec des segments durs de polyamide 6.

**23.** Composite multicouche selon l'une quelconque des revendications 1 à 22, **caractérisé en ce que** soit la couche intérieure est équipée d'un apprêt antistatique, soit une couche intérieure supplémentaire configurée sous forme conductrice est prévue, qui est configurée directement adjacente à la première couche intérieure et borde une chambre intérieure formée par le profilé creux.

**24.** Composite multicouche selon l'une quelconque des revendications 1 à 23, **caractérisé en ce que** l'élastomère de polyamide TPE-A (B) est choisi dans les sous-groupes constitués par les polyéther-amides, les polyéther-ester-amides, les polyéther-ester-éther-amides, les polyéther-amides étant préférés et notamment les polyéther-amides à base de séquences dures de polyamide 6 et/ou à base de séquences dures de polyamide 12, éventuellement avec ajout d'un promoteur de compatibilité.

**25.** Composite multicouche selon l'une quelconque des revendications 1 à 24, **caractérisé en ce que** le mélange pour la couche extérieure contient du polyamide 12 (A), ainsi que le polyamide 6-polyétheramide (B) et un modificateur de la résistance aux chocs agissant en tant que promoteur de compatibilité.

**26.** Composite multicouche selon l'une quelconque des revendications 1 à 25, **caractérisé en ce qu'**un modificateur de la résistance aux chocs est contenu dans le mélange pour la couche intérieure et/ou extérieure en une proportion de 5 à 35 % en poids, de préférence en une proportion de 8 à 30 % en poids, par rapport au poids du matériau de moulage total.

**27.** Composite multicouche selon l'une quelconque des revendications 1 à 26, **caractérisé en ce que** le rapport entre les composants PA (A):TPE-A (B) dans le mélange de la couche extérieure est de 1:1.

**28.** Composite multicouche selon l'une quelconque des revendications 1 à 27, **caractérisé en ce que** les mélanges de la couche intérieure et/ou les mélanges de la couche extérieure comprennent des additifs supplémentaires, choisis dans le groupe constitué par les plastifiants, les pigments, les charges, les modificateurs de la résistance aux chocs, qui peuvent également agir en tant que promoteur de compatibilité, tels que notamment un copolymère d'éthylène/oléfine modifié par un acide, les thermo- et photostabilisateurs, les agents renforçants ou leurs mélanges.

**29.** Composite multicouche selon la revendication 28, **caractérisé en ce qu'**un plastifiant est contenu dans la couche intérieure et/ou extérieure en une proportion de 5 à 20 % en poids, de préférence en une proportion de 10 à 15 % en poids, par rapport au poids du matériau de moulage total.

**30.** Composite multicouche selon l'une quelconque des revendications 1 à 29, **caractérisé en ce que** la couche de barrière est formée à base d'un copolymère d'éthylène/alcool vinylique (EVOH) ou à base de polymères fluorés, ou de polysulfures de phénylène, ou de polyesters cristallins liquides, ou de polyamides partiellement aromatiques, ou de polyesters partiellement aromatiques.

**31.** Procédé de fabrication d'un profilé creux multicouche selon l'une quelconque des revendications 1 à 30, **caractérisé en ce que** la couche extérieure et les autres couches sont assemblées par un procédé continu, de préférence par un procédé de co-extrusion, un procédé d'enrobage ou une extrusion en tandem pour former un profilé creux, notamment un tube ou un tuyau, des ondulations étant éventuellement encore appliquées, éventuellement suivies par une étape de façonnage thermique.

**32.** Utilisation des tubes multicouches ou des tuyaux multicouches selon l'une quelconque des revendications 2 à 30 dans le domaine automobile, notamment en tant que conduites de carburant, conduites d'air de freinage, conduites d'air comprimé, conduites hydrauliques, conduites de couplage et conduites de refroidissement.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 06015922 A
- EP 0245125 B1
- EP 1452307 A1
- GB 2390658 B
- DE 69831239 T2
- EP 1559537 A
- US 20020012806 A1
- EP 0710537 A2
- DE 3510395 A1
- US 5960977 A1
- DE 3724997 C2

- EP 0566755 B1
- DE 2716004 C3
- EP 1162061 B1
- DE 3916001 A1
- EP 0459862 B1
- CH 642982
- JP 59207930 A
- EP 0399415 B1
- US 5574128 A
- EP 0654505 A1

**In der Beschreibung aufgeführte Nicht-Patentliteratur**

- **W. MICHAELI, EINFÜHRUNG.** Kunststoffverarbeitung. Carl Hanser Verlag, 1999, 85
- **A. CARIN et al.** *Intern. Polymer Processing,* 2005, vol. XX, 305-311
- Polyamid-Kunststoffhandbuch. Carl Hanser Verlag, 1998, vol. 3/4, 872
- Polyamid-Kunststoffhandbuch. Carl Hanser Verlag, 1998, vol. 3/4, 854, , 855

- Polyamid-Kunststoffhandbuch. Carl Hanser Verlag, 1998, vol. 3/4, 854-871
- Polyamid-Kunststoffhandbuch. Carl Hanser Verlag, 1998, vol. 3/4, 875
- Kunststoff-Kompendium. Vogel-Verlag, 1988, 239